(19) Europäisches Patentamt
European Patent Office
Office européen des brevets

(11) EP 0 875 518 A1

# (12) EUROPÄISCHE PATENTANMELDUNG

(43) Veröffentlichungstag:
04.11.1998 Patentblatt 1998/45

(51) Int. Cl.$^6$: C08F 210/12, C08F 4/20

(21) Anmeldenummer: 98107023.8

(22) Anmeldetag: 17.04.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 30.04.1997 DE 19718201

(71) Anmelder: BAYER AG
51368 Leverkusen (DE)

(72) Erfinder:
• Langstein, Gerhard, Dr.
51515 Kürten (DE)
• Obrecht, Werner, Dr.
47447 Moers (DE)
• Bohnenpoll, Martin, Dr.
51375 Leverkusen (DE)
• Plesch, Peter H., Prof.Dr.
Newcastle, North Staffordshire, ST5 3ND (GB)

(54) **Terpolymere aus Isoolefinen, konjugierten Diolefinen und ein- oder mehrfach ungesättigten organischen Verbindungen**

(57) Gegenstand der vorliegenden Erfindung sind kautschukartige Terpolymere bestehend aus Isoolefinen, konjugierten Diolefinen und anderen ein- oder mehrfach ungesättigten, organischen Verbindungen (mit einem Molekulargewicht $\overline{M}_w$ von 50.000 bis 2.000.000 g/mol) sowie ein Verfahren zur Herstellung der neuen Terpolymere, in Gegenwart eines auf Vanadiumtetrachlorid-Kohlenwasserstofflösungen basierenden Initiatorsystems. Diese Terpolymere finden Verwendung zur Herstellung von Kautschukvulkanisaten, insbesondere Reifen.

**Beschreibung**

Gegenstand der vorliegenden Erfindung sind neue, kautschukartige Terpolymere bestehend aus Isoolefinen, konjugierten Diolefinen und anderen ein- oder mehrfach ungesättigten, organischen Verbindungen sowie ein Verfahren zur Herstellung der neuen Terpolymere.

Block-Copolymere aus (A) Isobuten, $C_3$-$C_{12}$-Olefinen und konjugierten Dienen und (B) kationisch oder anionisch polymerisierbaren Monomeren, wie Styrol oder Acrylaten, sind bekannt (JP-05 295 054). Diese Copolymeren haben wegen ihrer Blockstruktur ein schlechtes Covulkanisationsverhalten und sind somit für eine Anwendung im Reifenbereich nicht tauglich.

Weiterhin sind bekannt, Copolymere aus wenigstens einem $C_2$-$C_7$-$\alpha$-Olefin, wie Isobuten, Ethen oder Propen, und wenigstens einem $C_4$-$C_{14}$-Diolefin, wie Butadien, Isopren oder Cyclopentadien (DE-A-01 595 573). Diese Copolymerisate sind gekennzeichnet durch ein sehr niedriges Molekulargewicht ($M_n$ = 3000 bis 15 000 g/Mol) und sind somit für die Anwendung im Reifenbereich nicht tauglich.

Darüber hinaus sind bekannt, Copolymere aus Isobuten, einem Diolefin, wie Butadien oder Isopren, und einem kationisch polymerisierbaren aromatischen Monomeren, wie Styrol, $\alpha$-Methylstyrol, oder Divinylbenzol (DE 883 354, Canadisches Patent 464 086, US 2 539 523). Die in diesen Patentveröffentlichungen beschriebenen Beispiele zeigen für die Polymere überwiegend Molekulargewichte im Bereich von 5000 bis 60000 und eignen sich deshalb nur für Anwendungen als Kleb- und Dichtmassen, nicht jedoch für eine Verwendung im Reifenbereich.

Gegenstand der vorliegenden Erfindung sind neue, kautschukartige Terpolymere bestehend aus Isoolefinen mit 4 bis 16 Kohlenstoffatomen, konjugierten Diolefinen mit 4 bis 6 Kohlenstoffatomen und anderen ein- oder mehrfach ungesättigten, organischen Verbindungen mit 2 bis 20 Kohlenstoffatomen mit einem Molekulargewicht $\overline{M}_W$ von 50 000 bis 2 000 000 g/Mol, bevorzugt 100 000 bis 1 000 000 g/Mol, wobei das sich zu 100 ergänzende molare Verhältnis von Isoolefinen zu Diolefinen zu ungesättigten, organischen Verbindungen 50-99:0,5-46,5:0,5-49,5, bevorzugt 60-98:1,5-20:0,5-20 beträgt.

Als Isoolefine kommen bevorzugt solche mit 4 -16 Kohlenstoffatomen in Frage, wie Isobuten, 2-Methyl-1-buten, 2,3-Dimethyl-1-buten, 2-Methyl-1-penten und $\beta$-Pinen, insbesondere Isobuten und 2-Methyl-1-buten.

Als konjugierte Diolefine seien bevorzugt genannt Isopren, Butadien, 2,3-Dimethylbutadien, Cyclopentadien, Methylcyclopentadien, 1,3-Cyclohexadien, insbesondere Isopren.

Als ein- oder mehrfach ungesättigte, organische Verbindungen kommen kationisch nicht oder nur sehr schwer polymerisierbare Olefine in Frage, bevorzugt 1-Olefine mit 2 bis 20 Kohlenstoffatomen, wie Ethen, Propen, 1-Buten, 1-Penten, 1-Hexen, 1-Hepten, 1-Octen, 1-Nonen, 1-Decen, 5-Vinyl-2-norbornen, insbesondere Ethen und Propen.

Die erfindungsgemäßen Terpolymere besitzen eine Mooney-Viskosität von 30-100, bevorzugt 45-80, einen Gelanteil von 0 % bis 50 %, bevorzugt 0,5-5 % und einen Staudinger-Index von 0,5-2, bevorzugt 1-1,5.

Ein weiterer Gegenstand der vorliegenden Erfindung ist ein Verfahren zur Herstellung der oben beschriebenen Terpolymere, das dadurch gekennzeichnet ist, daß man Isoolefine mit 4 bis 16 Kohlenstoffatomen mit konjugierten Diolefinen mit 4 bis 6 Kohlenstoffatomen und ein- oder mehrfach ungesättigten, organischen Verbindungen mit 2 bis 20 Kohlenstoffatomen in Gegenwart eines auf Vanadiumtetrachlorid-Kohlenwasserstofflösungen basierenden Initiatorsystems bei Temperaturen von -100°C bis +100°C, bevorzugt -70°C bis 0°C und Drücken 0,001 bis 70 bar, bevorzugt 0,01-10, polymerisiert, wobei das sich zu 100 ergänzende molare Verhältnis von Isoolefinen zu Diolefinen zu ungesättigten, organischen Verbindungen 50-99:0,5-46,5:0,5-49,5, bevorzugt 60-98:1,5-20:0,5-20 beträgt.

Das erfindungsgemäße Verfahren kann sowohl kontinuierlich als auch in diskontinuierlicher Fahrweise durchgeführt werden. Die Polymerisation kann in Lösung, in Substanz, in Suspension sowie in der Gasphase durchgeführt werden.

Das auf Vanadiumtetrachlorid-Kohlenwasserstofflösungen basierende Initiatorsystem zur Herstellung der erfindungsgemäßen Terpolymere ist bekannt und beschrieben in der deutschen Patentanmeldung DE-A 19 627 529.

Für die erfindungsgemäße Polymerisation ist es von großer Bedeutung, definiert gealterte Vanadiumtetrachlorid-Kohlenwasserstofflösung einzusetzen, gegebenenfalls in Kombination mit einem Coinitiator, wie in der genannten deutschen Patentanmeldung beschrieben.

Geeignete Lösungsmittel für die Polymerisation im Sinne der Erfindung sind aliphatische und/oder aromatische (gegebenenfalls halogenierte) Kohlenwasserstoffe ohne funktionelle Substituenten. Bevorzugt werden Lösungsmittel mit einem Schmelzpunkt unterhalb 20°C, besonders bevorzugt werden Lösungsmittel mit einem Schmelzpunkt unterhalb 0°C, eingesetzt.

Beispiele für geeignete (aliphatische) Lösungsmittel sind: Methylchlorid, Methylenchlorid, Chloroform, Tetrachlorkohlenstoff, Pentan, Hexan, 2,3-Dimethylbutan, Heptan, Cyclohexan, Methylcyclohexan, Chlorethan, 1,1-Dichlorethan, 1,2-Dichlorethan, 1,1,1-Trichlorethan, 1,1,2,2-Tetrachlorethan, Pentachlorethan, Hexachlorethan, 1-Chlorpropan, 2-Chlorpropan, 1,2-Dichlorpropan, 1,2,3-Trichlorpropan, 1-Chlorbutan, 2-Chlorbutan, 1,4-Dichlorbutan, 1-Chlor-2-methylpropan, 1-Chlorpentan, 2,4-Dimethylpentan, 2,24-Trimethylpentan, Dodecan, 1-Chlordodecan, Petrolether, Chlorcyclohexan, Cyclododecan, Decalin.

Beispiele für aromatische Lösungsmittel sind: Benzol, Toluol, Chlorbenzol, 1,2-Dichlorbenzol, Ethylbenzol, Xylol, 1,2,3-Trimethylbenzol, 1,2,4-Trimethylbenzol, 1,3,5-Trimethylbenzol, Diethylbenzol, 1,2,3,4-Tetramethylbenzol, 1,2,3,5-Tetramethylbenzol, 1,2,4,5-Tetramethylbenzol, Pentamethylbenzol, 1-Isopropyl-4-methylbenzol, 1,3-Diisopropylbenzol, 1,4-Diisopropylbenzol, 1-tert.-Butyl-3,5-dimethylbenzol, 1,3,5-Triisopropylbenzol.

Die als Coinitiatoren gegebenenfalls verwendeten aromatischen Verbindungen sind dadurch gekennzeichnet, daß es sich bei ihnen um polycyclische (mindestens bicyclische) aromatische und/oder heteroaromatische Kohlenwasserstoffe handelt, die durch Alkyl- oder Alkenylgruppen substituiert sein können. Bevorzugt werden bi-, tri- und tetracyclische Systeme. Beispiele für geeignete Verbindungen sind: Naphthalin, Anthracen, Inden, Cumaron, Carbazol, N-Vinylcarbazol, Biphenyl, p-Terphenyl, Acenaphthen, Acenaphthylen, Fluoranthen, Fluoren, Phenanthren, Pyren oder octyliertes Diphenylamin (Vulkanox OCD von BAYER).

Die Bedingungen für die Alterung des Initiators sind abhängig vom verwendeten Lösungsmittel. Geeignete Lösungsmittel für die Alterung des Initiators im Sinne der Erfindung sind Kohlenwasserstoffe, insbesondere aliphatische und aromatische Kohlenwasserstoffe ohne funktionelle Substituenten mit 4 bis 20 Kohlenstoffatomen und mit einem Siedepunkt oberhalb -20°C. Bevorzugt werden Lösungsmittel mit einem Schmelzpunkt unterhalb 20°C, besonders bevorzugt werden Lösungsmittel mit einem Schmelzpunkt unterhalb 0°C. Beispiele für Kohlenwasserstoffe sind: Pentan, Hexan, 2,3-Dimethylbutan, Heptan, Cyclopentan und/oder Methylcyclohexan, besonders bevorzugt sind Pentan und Hexan.

Die Alterung des Initiators kann prinzipiell in einem weiten Temperaturbereich erfolgen und wird grundsätzlich nur durch den Schmelzpunkt und den Siedepunkt des verwendeten Lösungsmittels begrenzt. Bevorzugt wird ein Temperaturbereich von 0 bis 40°C, besonders bevorzugt +10 bis +30°C. Die Alterung kann in Gegenwart von Licht oder aber in der Dunkelheit erfolgen.

Bevorzugt wird Tageslicht; Kunstlicht (im sichtbaren oder ultravioletten Bereich) (z.B. Glühbirne oder Quecksilberdampflampe) ist ebenso einsetzbar.

Die optimale Alterungszeit ist abhängig vom verwendeten Lösungsmittel, der Temperatur, der Lichtmenge und der Konzentration der Lösung. Alterungszeiten von einigen Minuten bis zu mehreren Wochen sind möglich, bevorzugt werden Alterungszeiten von einigen Stunden bis zu einigen Tagen, besonders bevorzugt werden Alterungszeiten von einer Stunde bis zu 24 Stunden.

Die Konzentration des Vanadiumtetrachlorids beim Altern kann von 0,01 mmol pro Liter Lösungsmittel bis 10 mol pro Liter Lösungsmittel variieren. Die Alterung des Initiators kann in Abwesenheit oder in Gegenwart des Coinitiators erfolgen. In einer bevorzugten Ausführungsform erfolgt die Alterung in Abwesenheit des Coinitiators. Der gealterte Initiator kann direkt zur Initiierung der Polymerisation eingesetzt oder einer Filtration unterworfen werden, um unlösliche Bestandteile abzutrennen.

Zum Entfernen von Verunreinigungen, insbesondere Feuchtigkeit, können gegebenenfalls als Trocknungsmittel Alkali- und Erdalkalimetalle, deren Amalgame mit Quecksilber oder Wasserstoffverbindungen der Metalle der I., II., III. und IV. Gruppe des Periodensystems (Mendelejew) dem Monomergemisch zugesetzt werden.

Die Menge an Initiator, die bei dem erfindungsgemäßen Verfahren eingesetzt wird, beträgt 0,001 mmol bis 100 mmol, bevorzugt 0,01 mmol pro Mol Isoolefin. Die geeignetste Menge kann jeweils durch entsprechende Vorversuche bestimmt werden.

Die Menge an Lösungsmittel beträgt 0,1 bis 50 kg, bevorzugt 0,1 bis 10 kg pro kg Monomergemisch.

Auch hier ist die günstigste Menge an Lösungsmittel leicht durch entsprechende Vorversuche zu ermitteln.

In einer bevorzugten Ausführungsform wird das erfindungsgemäße Verfahren in diskontinuierlicher Fahrweise beispielsweise wie folgt durchgeführt: Der auf Reaktionstemperatur vorgekühlte Reaktor wird mit dem Lösungsmittel, dem Coinitiator und den Monomeren beschickt. Der Initiator wird anschließend mit einer Geschwindigkeit von 1 ml pro Stunde bis 1000 ml pro Stunde zugepumpt, bis sich eine exotherme Reaktion einstellt. Alle Operationen werden unter Schutzgas oder einem leichten Vakuum durchgeführt. Der Verlauf der Reaktion wird anhand der Wärmeentwicklung verfolgt. Nach Beendigung der exothermen Reaktion wird mit 2,6-Di-tert.-butyl-4-methyl-phenol, gelöst in Ethanol, abgestoppt und das entsprechende Terpolymere isoliert.

Es ist überraschend, daß mit dem erfindungsgemäßen Verfahren neue, kautschukartige Terpolymere bestehend aus Isoolefinen, konjugierten Diolefinen und ein- oder mehrfach ungesättigten, organischen Verbindungen hergestellt werden können, die ein sehr hohes Molekulargewicht besitzen und daher besonders gut beispielsweise für den Reifenbau verwendet werden können. Die physikalischen Eigenschaften der Terpolymere sind vergleichbar mit bekannten Copolymere auf Basis von Isoolefinen und Diolefinen; die Verarbeitungseigenschaften sind ebenfalls sehr günstig, was sich in den entsprechenden Mooney-Viskositäten ausdrückt.

## Beispiele

Die **Gelgehalte** wurden in Toluol nach einer Lösezeit von 24 Stunden bei 30°C mit einer Probenkonzentration von 12,5 g/l bestimmt. Die Abtrennung der unlöslichen Anteile erfolgte durch Ultrazentrifugation (1 Stunde bei 20 000 Umdrehungen/Minute und 25°C).

Die **Lösungsviskosität** η der löslichen Anteile wurde in Toluol bei 30°C durch Ubbelohde-Kapillarviskosimetrie bestimmt.

Das aus der Lösungsviskosität berechnete **Molekulargewicht Mv** wurde nach der folgenden Formel bestimmt:
ln (Mv) = 12,48 + 1,565 * ln η .

Die Messung der **Mooney-Viskositäten** erfolgte nach 8 Minuten bei einer Temperatur von 125°C.

Die Messung der **UV-Spektren** der Katalysatorlösungen erfolgten mit einem UV-Spektrometer der Firma Perkin-Elmer bei Raumtemperatur mit einer unverdünnten Katalysatorlösung in einer Küvette mit 0,01 mm Schichtdicke.

Die verwendeten **Lösungsmittel** wurden, sofern nicht anders angegeben, vor Gebrauch zur Reinigung unter einer Argonatmosphäre über Calciumhydrid destilliert.

Das bei den Polymerisationen eingesetzte **Isobuten** wurde zur Trocknung durch eine mit Natrium auf Aluminiumoxid gefüllte Säule geleitet.

Das verwendete **Isopren** wurde zur Entfernung des Stabilisators unter Argon durch eine Säule mit getrocknetem Aluminiumoxid filtriert und in dieser Form für die Polymerisation eingesetzt.

Die anderen verwendeten **Comonomeren** wurden vor Gebrauch zur Reinigung unter einer Argonatmosphäre über Calciumhydrid destilliert.

Die **Einbaurate** und die **Art des Einbaus** der unterschiedlichen Monomeren wurde durch $^1$H-NMR und $^{13}$C-NMR bestimmt.

## Beispiel 1

500 ml Hexan wurden unter Argon vorgelegt. 24,1 g (0,125 mol) Vanadiumtetrachlorid wurden zugegeben. Die Lösung wurde 7 Tage unter leichtem Rühren dem Tageslicht ausgesetzt, wobei eine deutliche Vertiefung der Rotfärbung und das Auftreten geringer Mengen eines Feststoffs beobachtet wurden. Das Ausmaß dieser Farbänderung läßt sich am Vergleich der UV-Spektren erkennen, die in dem unten angefügten Diagramm nebeneinander dargestellt sind.

**UV-Spektren als Funktion der Alterungsdauer**

Der ausgefallene Feststoff (<<1 %) wurde unter Argon abfiltriert. Die verbleibende Lösung wurde unter Argon aufbewahrt und in dieser Form für die Initiierung der Polymerisation benutzt.

Bei sachgemäßer Aufbewahrung kann diese Lösung mehrere Wochen verwendet werden. Evtl. bei der Lagerung auftretende leichte Trübungen können durch Filtration entfernt werden.

## Beispiel 2

400 g (7,14 mol) Isobuten, 11,918 g (0,175 mol) Isopren, 100 g (2,376 mol) Propen und 0,036 g (0,2 mmol) Anthracen wurden bei einer Temperatur von -50°C unter einer Argonatmosphäre vorgelegt. Unter Lichtausschluß wurden 6,4 ml einer gemäß Beispiel 1 hergestellten Initiatorlösung innerhalb von 15 Minuten zugetropft. Nach 30 Minuten wurde die schwach exotherme Reaktion wegen der zunehmenden Viskosität durch Zugabe einer vorgekühlen Lösung von 1 g 2,2'-Methylen-bis(4-methyl-6-tert-butylphenol) (Vulkanox BKF der Firma Bayer AG Leverkusen) in 250 ml Ethanol abgestoppt. Das ausgefallene Polymer wurde nach dem Abdekantieren der Flüssigkeit mit 2,5 l Methanol gewaschen, zu einem dünnen Fell ausgewalzt und im Vakuum bei 50 °C einen Tag getrocknet. (Ausbeute: 157 g = 30,6 %)

Das so erhaltene farblose Polymer hatte einen Mooney-Wert von 52,5, einen Gelanteil von 46 % und einen Staudinger-Index von 0,75 dl/g. Mv = 167 700.

Durch NMR-Messungen wurden folgende Monomergehalte ermittelt:

Isopren     2,5 +/- 0,2 Mol%
Isobuten    87,7 +/- 0,9 Mol%
Propen      9,8 +/- 0,9 Mol%

**Beispiel 3**

300 g (5,35 mol) Isobuten, 11,918 g (0,175 mol) Isopren, 200 g (4,752 mol) Propen und 0,036 g (0,2 mmol) Anthracen wurden bei einer Temperatur von -50°C unter einer Argonatmosphäre vorgelegt. Die Polymerisation erfolgte entsprechend den Bedingungen von Beispiel 2. Ausbeute: 45,5 g = 8,9 %

Das so erhaltene farblose Polymer hatte einen Mooney-Wert von 12, einen Gelanteil von 42 % und einen Staudinger-Index von 0,217 dl/g. Mv = 24 100.

Durch NMR-Messungen wurden folgende Monomergehalte ermittelt:

Isopren     3,6 +/- 0,2 Mol%
Isobuten    81,0 +/- 0,5 Mol%
Propen      15,4 +/- 0,5 Mol%

**Beispiel 4 (Vergleichsbeispiel)**

200 g (3,57 mol) Isobuten, 11,918 g (0,175 mol) Isopren, 300 g (7,128 mol) Propen und 0,036 g (0,2 mmol) Anthracen wurden bei einer Temperatur von -50°C unter einer Argonatmosphäre vorgelegt. Die Polymerisation erfolgte entsprechend den Bedingungen von Beispiel 2. Ausbeute: 3,4 g = 0,7 %

Wegen der geringen Ausbeute wurde das Polymer nicht weiter untersucht. Dieses Beispiel zeigt deutlich den bereits in Beispiel 3 erkennbaren Trend zur Verminderung der Ausbeute und des Mooney-Werts mit steigender Propen-Konzentration.

**Beispiel 5**

400 g (7,14 mol) Isobuten, 11,918 g (0,175 mol) Isopren, 100 g (0,83 mol) 5-Vinyl-2-norbornen und 0,036 g (0,2 mmol) Anthracen wurden bei einer Temperatur von -40°C unter einer Argonatmosphäre vorgelegt. Die Polymerisation erfolgte entsprechend den Bedingungen von Beispiel 2. Ausbeute: 53,7 g = 10,5 %

Das so erhaltene leicht braune Polymer hatte einen Gelanteil von 0,5 % und einen Staudinger-Index von 0,391 dl/g. Mv = 60 500.

Durch NMR-Messungen wurden folgende Monomergehalte ermittelt:

Isopren            2,2 Mol%
Isobuten           92,1 Mol%
endo-Vinylnorbornen   1,7 Mol%

**Patentansprüche**

1. Terpolymere bestehend aus Isoolefinen mit 4 bis 16 Kohlenstoffatomen, konjugierten Diolefinen mit 4 bis 6 Kohlenstoffatomen und anderen ein- oder mehrfach ungesättigten, organischen Verbindungen mit 2 bis 20 Kohlenstoffatomen mit einem Molekulargewicht $\overline{M}_W$ von 50 000 bis 2 000 000 g/mol, wobei das sich zu 100 ergänzende molare Verhältnis von Isoolefinen zu Diolefinen zu ungesättigten, organischen Verbindungen 50-99:0,5-49,5:0,5-49,5 beträgt.

2. Verfahren zur Herstellung von Terpolymeren nach Anspruch 1, dadurch gekennzeichnet, daß man Isoolefine mit 4 bis 16 Kohlenstoffatomen, konjugierte Diolefine mit 4 bis 6 Kohlenstoffatomen und anderen ein- oder mehrfach ungesättigte, organische Verbindungen mit 2 bis 20 Kohlenstoffatomen in Gegenwart eines auf Vanadiumtetrachlorid-Kohlenwasserstofflösungen basierenden Initiatorsystems, dem gegebenenfalls ein Coinitiator beigegeben ist, bei Temperaturen von -100°C bis +100°C und Drücken von 0,001 bis 70 bar polymerisiert und wobei das sich zu 100 ergänzende molare Verhältnis von Isoolefinen zu Diolefinen zu ungesättigten, organischen Verbindungen 50-99:0,5-49,5:0,5-49,5 beträgt.

3. Verwendung der Terpolymere nach Anspruch 1 zur Herstellung von Kautschukvulkanisaten, insbesondere Reifen.

**EP 0 875 518 A1**

Europäisches Patentamt

# EUROPÄISCHER RECHERCHENBERICHT

Nummer der Anmeldung

EP 98 10 7023

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 3 661 870 A (BULLARD HERBERT L) 9.Mai 1972 <br> * Anspruch 1; Beispiel 1 * <br> --- | 1 | C08F210/12 <br> C08F4/20 |
| A | US 4 151 338 A (DISTELDORF JOSEF ET AL) 24.April 1979 <br> * Beispiel 1 * <br> --- | 1 | |
| A | FR 2 321 510 A (MUANYAGIPARI KUTATO INTEZET) 18.März 1977 <br> * Anspruch 1; Beispiel 2 * <br> ----- | 1 | |

RECHERCHIERTE SACHGEBIETE (Int.Cl.6)

C08F

Der vorliegende Recherchenbericht wurde für alle Patentansprüche erstellt

| Recherchenort | Abschlußdatum der Recherche | Prüfer |
|---|---|---|
| DEN HAAG | 24.Juli 1998 | Gamb, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

7